# EUROPEAN PATENT SPECIFICATION

(11) **EP 2 629 040 B1**
(45) Date of publication and mention of the grant of the patent: **29.07.2020**
(21) Application number: 13153583.3
(22) Date of filing: 01.02.2013
(51) Int. Cl.: F25B 29/00, F28D 9/00, F28F 3/08, B60H 1/00, B60H 1/32, F24F 13/30, F25B 25/00, F25B 39/04, F25B 40/02, F28D 21/00

(54) **A unitary heat pump air conditioner having a heat exchanger with an integral receiver and sub-cooler.**
Wärmepumpenklimaanlage mit Wärmetauscher mit integriertem Sammler und Unterkühler
Climatiseur à pompe à chaleur unitaire comportant un échangeur de chaleur avec un récepteur monobloc et refroidisseur secondaire

(30) Priority: 14.02.2012 US 201213396211; 20.04.2012 US 201213451841
(43) Date of publication of application: 21.08.2013
(73) Proprietor: MAHLE International GmbH, 70376 Stuttgart (DE)
(72) Inventor: Kadle, Prasad, Shripad, Williamsville, NY New York 14221 (US); Vreeland, Gary Scott, Medina, NY New York 14103 (US); Oddi, Frédérick Vincent, Orchard Park, NY New York 14127 (US)
(74) Representative: BRP Renaud & Partner mbB Rechtsanwälte Patentanwälte Steuerberater

(56) References cited:
- EP-A2- 2 174 810
- WO-A1-2011/039186
- US-A1- 2007 039 714

## Description

### TECHNICAL FIELD OF INVENTION

The present disclosure relates to a heating and air-conditioning system for an automotive vehicle; particularly, to a heat pump air-conditioning system; still more particularly, to a heat exchanger for a heat pump air-conditioning system.

### BACKGROUND OF INVENTION

For the comfort of the occupants in the passenger compartment, motor vehicles typically include dedicated air-conditioning systems and heating systems. The heating system includes a heater core located inside a heating, ventilating, and air conditioning (HVAC) module of the vehicle. The heater core is typically a liquid-to-air heat exchanger that supplies thermal energy to the passenger compartment for comfort heating. A heat transfer liquid, such as a glycol based coolant, conveys waste heat from an internal combustion engine to the heater core where the thermal energy from the heat transfer liquid is transferred to the ambient air flowing through the heater core to the passenger compartment. With the advent of greater efficiency internal combustion engines, hybrid vehicles having smaller internal combustion engines, and especially electrically driven vehicles, the amount of thermal energy available to provide comfort to occupants in the passenger compartment may not be adequate.

To provide supplemental heat to the passenger compartment for vehicles having smaller internal combustion engines, it is known to operate the air-conditioning system in heat pump mode. A typical motor vehicle air-conditioning system includes an evaporator located in the HVAC module and a condenser located in the front engine compartment exposed to outside ambient air. A compressor circulates a two-phase refrigerant through the evaporator where it expands into a low pressure vapor refrigerant by absorbing heat from the passenger compartment. After the low pressure vapor is compressed to a high pressure vapor by the compressor, the vapor phase refrigerant is transferred to the condenser where the high pressure vapor is condensed into a high pressure liquid refrigerant by releasing the heat to the ambient air. The liquid phase is returned to the evaporator through an expansion device which converts the high pressure liquid refrigerant to a low pressure mixture of liquid and vapor refrigerant to continue the cycle. By operating the air-conditioning system in heat pump mode, the refrigerant flow is reversed, in which case the condenser absorbs heat from the outside ambient air by evaporating the liquid phase refrigerant and the evaporator releases the heat to the passenger compartment by condensing the vapor phase refrigerant. One disadvantage to operating the air-conditioning system in heat pump mode, since the low pressure side of the system when used in air conditioning mode would become the high pressure side when used in heat pump mode, is the increase in system complexity due to the requirement of having to reinforce the refrigerant plumbing throughout the system by using thicker gage tubing and fittings. There is also the need to reinforce the evaporator to withstand the high pressure refrigerant, and to install an additional expansion device and receiver together with additional associated plumbing. Another known disadvantage of operating the system in heat pump mode is that in cooler climates, as the surface temperature of the condenser drop below 32 °F, any moisture condensed on the surface of the condenser is subject to freezing, therefore resulting in reduced efficiency of the system and even potentially damaging the condenser.

Electric heaters are known to be used to provide supplemental heat to the passenger compartment for vehicles using the air-conditioning system as a heat pump. In the coldest of climates, it is known that operating the air-conditioning system in heat pump mode is ineffective; therefore, additional electric heaters are required. However, for hybrid and electrical vehicles, electrical heaters represent an increased current draw that significantly reduces the electric drive range.

Based on the foregoing, there is need for a heating system that provides supplementary heat to the passenger compartment of a motor vehicle that does not require reversing the refrigerant cycle of the air-conditioning system or detrimentally impact the electric driving range. A heat exchanger assembly according to the preamble of claim 1 is known from EP 2 174 810 A2.

### SUMMARY OF THE INVENTION

The present invention relates to Unitary Heat Pump Air Conditioner (Unitary HPAC) for a Unitary HPAC System. The Unitary HPAC includes a hot-side heat exchanger assembly having a plurality of plates stacked and hermetically sealed between an upstream end plate and a downstream end plate. The plurality of stacked plates define a condenser/chiller portion adjacent the upstream end plate, a sub-cooler portion adjacent the downstream end plate, and a refrigerant receiver portion sandwiched between the condenser/chiller portion and the sub-cooler portion. The upstream end plate includes a refrigerant inlet and a hot coolant outlet, and the downstream end plate includes a refrigerant outlet, a hot coolant inlet, a sub-cooler coolant inlet and a sub-cooler coolant outlet.

The hot-side heat exchanger assembly includes a refrigerant passageway in hydraulic communication with the refrigerant inlet and the refrigerant outlet, a first coolant passageway in hydraulic communication with the hot coolant inlet and the hot coolant outlet, and a second coolant passageway in hydraulic communication with the sub-coolant inlet and the sub-coolant outlet. The first coolant passageway and the second coolant passageway are in non-contact thermal communication with the refrigerant passageway.

The unitary HPAC may include a cold-side heat exchanger assembly having a refrigerant inlet in hydraulic communication with the refrigerant outlet of hot-side heat exchanger assembly and a refrigerant outlet in hydraulic communication with the refrigerant inlet of hot-side heat exchanger assembly. The unitary HPAC may further include an electrically driven compressor for circulating a refrigerant through the cold-side heat exchanger assembly and the hot-side heat exchanger assembly such that heat energy is transferred from the cold-side heat exchanger assembly to the hot-side heat exchanger assembly, an electrically driven hot side coolant pump in hydraulic communication with the coolant inlet of hot-side heat exchanger assembly, and an electrically driven cold side coolant pump in hydraulic communication with a coolant inlet of the cold-side heat exchanger assembly.

An embodiment of the invention provides a Unitary HPAC that is compact and easily installed in virtually any compartment of a vehicle that is about the size a typical bread box. In vehicles with small efficient internal combustion engines, the Unitary HPAC scavenges heat from waste heat sources, such as the vehicle electronics, and use the waste heat to supplement the heating needs of the passenger compartment. In hybrid and electric vehicles, the Unitary HPAC improves the driving ranges in cold climates by minimizing the use of electric current to power electric heaters and providing heat to the battery packs to maintain an optimal operating temperature. Further features and advantages of the invention will appear more clearly on a reading of the following detailed description of an embodiment of the invention, which is given by way of nonlimiting example only and with reference to the accompanying drawings.

### BRIEF DESCRIPTION OF DRAWINGS

This invention will be further described with reference to the accompanying drawings in which:
Fig. 1 a schematic flow diagram for a Unitary Heat Pump Air Conditioner (Unitary HPAC) System having a Unitary HPAC in accordance with the invention.
Fig. 2 shows an embodiment of the Unitary HPAC in accordance with the invention.
Fig. 3 is a cross-section of the hot-side heat exchanger assembly of Fig. 2 having an integral condenser/chiller portion, receiver portion, and sub-cooler portion taken along lines 3-3 showing the path of refrigerant flow.
Fig. 4 is a cross-section of the hot-side heat exchanger assembly of Fig. 2 taken along lines 4-4 showing the path of the hot-side coolant flow.

### DETAILED DESCRIPTION OF INVENTION

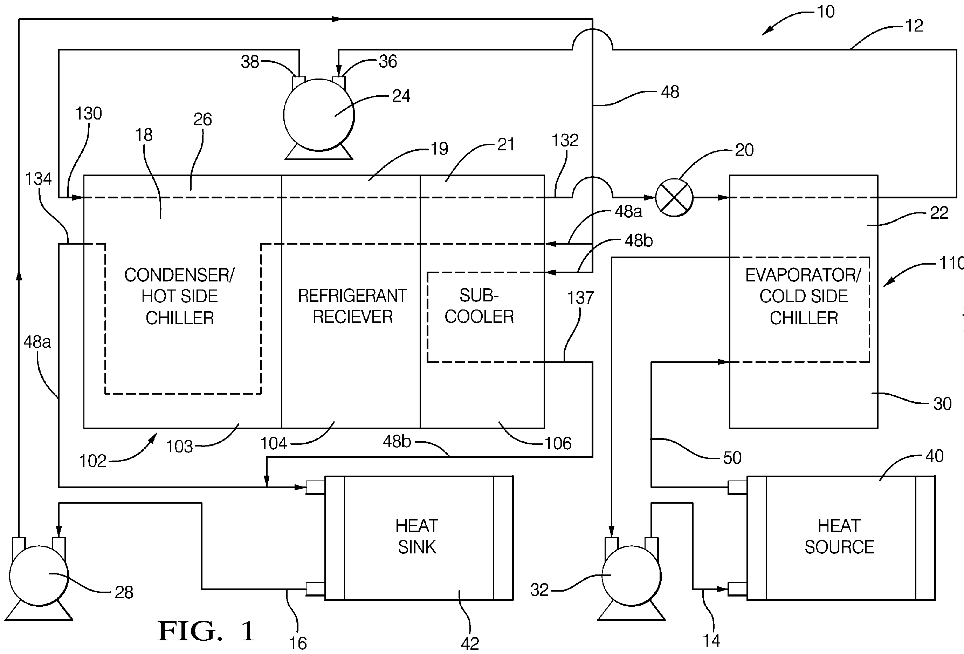

Referring to Figs. 1 through Fig. 4, wherein like numerals indicate corresponding parts throughout the several views, is a Unitary Heat Pump Air Conditioner (Unitary HPAC) System 10 and an embodiment of a Unitary HPAC 100 for use in a motor vehicle. The motor vehicle may be that of one with an internal combustion engine, a hybrid vehicle having both an internal combustion engine and an electric drive, or that of an electric vehicle having an electric drive. The Unitary HPAC System 10 includes a Unitary HPAC 100 that is compact and easily installed in virtually any compartment of the vehicle that is about the size of a bread box or larger. Further advantages of the Unitary HPAC System 10 will be readily appreciated by the reading of the disclosure below.

Shown in Fig. 1 is flow schematic of the Unitary HPAC System 10 having a dedicated refrigerant loop 12 in thermal communication with a cold coolant loop 14 and a hot coolant loop 16. The cold coolant loop 14 conveys waste heat energy away from a heat source 40 within the vehicle, such as the waste heat from the internal combustion engine or electronics, thereby cooling the heat source 40. The refrigerant loop 12 transfers the heat energy from the cold coolant loop 14 to the hot coolant loop 16, which in turn conveys the heat energy to a heat sink 42, such as an occupant heat exchanger to provide supplemental heat to the passenger compartment. In essence, the Unitary HPAC System 10 effectively captures waste heat energy from one part of the vehicle and puts it to beneficial use within another part of the vehicle. As an alternative, the heat sink 42 may be a radiator type heat exchanger exposed to the outside ambient air where the waste heat is dissipated to the external environment. The flow paths of the cold and hot coolant loops 14, 16 throughout the vehicle may be reconfigured based on the cooling and heating needs of the vehicle. The cold and hot coolant loops 14, 16 may include a myriad of interconnecting branches with remotely activated valves at strategic nodes that may be reconfigured to redefine the flow paths of the cold and hot coolant loops 14, 16 to selectively provide cold or hot coolant flows to multiple designated heat sources 40 or heat sinks 42, respectively.

The refrigerant loop 12 includes a condenser 18, a refrigerant receiver 19, a sub-cooler 21, a refrigerant expansion device 20, and an evaporator 22 hydraulically connected in series. At the heart of the refrigerant loop is a refrigerant compressor 24 located downstream of the evaporator 22 and upstream of the condenser 18. The compressor 24 is responsible for compressing and transferring a two-phase refrigerant, such as R-134a or R-1234yf, throughout the refrigerant loop 12 of the Unitary HPAC System 10. The compressor cycles the refrigerant through the refrigerant loop 12 to transfer heat energy from the cold coolant loop 14, which includes a cold side chiller 30, to the hot coolant loop 16, which includes a hot side chiller 26. For illustrative purposes, the hot side chiller 26 and cold side chiller 30 may be that of a water or coolant jacket encasing the condenser 18 and evaporator 22, respectively, or may be part of a plate-type heat exchanger assembly, which is disclosed in greater detail below.

The refrigerant cycle of the refrigerant loop 12 is typically the same as that of a dedicated air conditioning system of a motor vehicle operating in cooling mode. A two phase refrigerant is circulated through the refrigerant loop 12 by the compressor 24, which includes a suction side 36, also referred to as the low pressure side, and a discharge side 38, also referred to as the high pressure side. The suction side of the compressor receives a low pressure vapor phase refrigerant from the evaporator 22, after absorbing heat from the cold coolant loop 14 by way of the cold side chiller 30, and compresses it to a high pressure vapor phase refrigerant, which is then discharged to the condenser 18. As the high pressure vapor phase refrigerant is condensed to a high pressure liquid phase refrigerant in the condenser 18, heat is transferred to the hot coolant loop16 by way of the hot side chiller 26. Exiting the condenser 18, the high pressure liquid phase refrigerant passes through the refrigerant receiver 19 to separate any refrigerant vapor, the sub-cooler 21 to further cool the liquid phase refrigerant, and then to the refrigerant expansion device 20, through which the refrigerant begins to expand into a mixture of a bubbling gas-liquid phase. The bubbling gas-liquid phase refrigerant enters the evaporator 22 and continues to expand into the low pressure vapor refrigerant by absorbing heat from the cold coolant loop 14. The low pressure high quality/superheated vapor refrigerant is then cycled back to the suction side 36 of the compressor 24 to repeat the process.

The cold coolant loop 14 includes the cold side chiller 30 in non-contact thermal communication with the evaporator 22 and a cold side coolant pump 32 that circulates a cold side coolant 50 through the cold side chiller 30. As the refrigerant expands within the evaporator 22, heat energy is transferred from the cold coolant loop 14 to the refrigerant loop 12.

The hot-coolant loop 16 includes the hot side chiller 26 in non-contact thermal communication with the condenser 18 and a hot side coolant pump 28 that circulates a hot side coolant 48 through the hot side chiller 26. The hot side coolant 48 flowing in the hot-coolant loop 16 is split into a first portion hot side coolant 48a and a second portion hot side coolant 48b. The hot side coolant pump 28 circulates the first portion hot side coolant 48a through the hot side chiller 26 and the second portion of the hot side coolant 48b through the sub-cooler 21. The first portion hot side coolant 48a flows directly through both the sub-cooler 21 and receiver 19 into the hot-side chiller 26, within which heat energy is transferred from the higher temperature refrigerant to the lower temperature first portion of the hot side coolant 48. The heated first portion hot side coolant 48a exits the hot-side chiller 26 into the heat sink 42. The second portion hot side coolant 48b flows through the sub-cooler 21 to further cool the liquid phase refrigerant. After exiting the sub-cooler 21, the second portion hot side coolant 48b joins the first portion of the hot side coolant 48a before flowing into the heat sink 42.

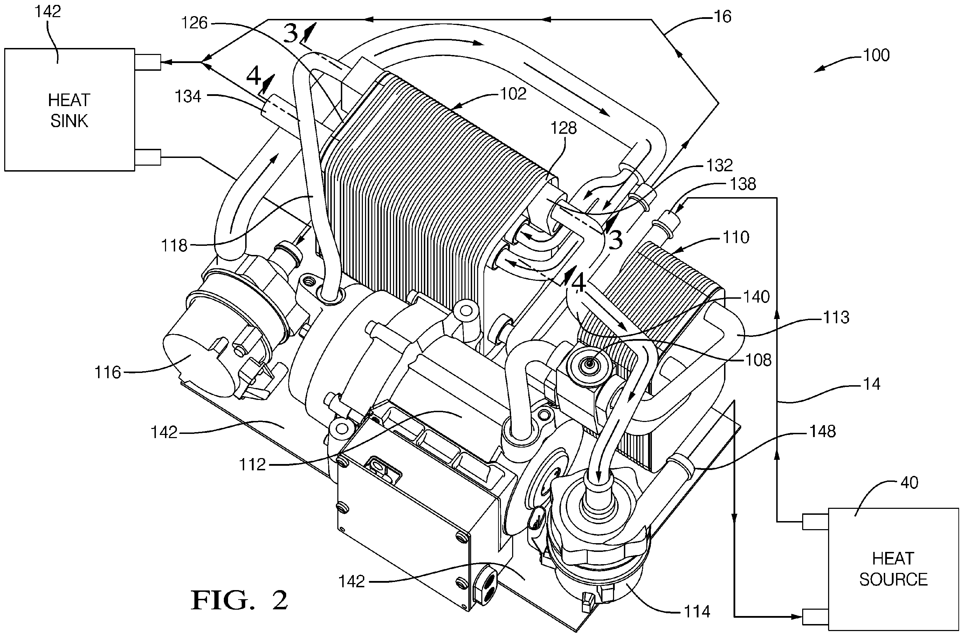

With reference to Figs. 2, 3,and 4, an embodiment of the invention includes an integrated hot-side heat exchanger assembly 102 having a condenser/chiller portion 103, a receiver portion 104, and a sub-cooler portion 106 manufactured from a plurality of stamped metal plates. The integrated hot-side heat exchanger assembly 102 may also include an internal heat exchanger (IHX) as disclosed in U.S. Patent Application No. 13/396,211. An embodiment of the invention may also include a cold-side heat exchanger assembly 110 having an integral evaporator/chiller portion also manufactured from a plurality of stamped metal plates.

Shown in Fig. 2 is an exemplary compact Unitary HPAC 100 in accordance with an embodiment of the invention. The Unitary HPAC 100 shown includes a hot-side heat exchanger assembly 102, a refrigerant expansion device such as a thermal expansion valve (TXV) 108, and a cold-side heat exchanger assembly 110. The Unitary HPAC 100 also includes an electrically driven compressor 112 for the circulation of a typical two-phase refrigerant through a series of refrigerant tubes 113 and electrically driven cold side and hot side coolant pumps 114, 116 configured to hydraulically connect to the cold coolant loop and hot coolant loop 14, 16, respectively. The compressor 112 may be that of a compact scroll compressor driven by a permanent magnet motor with neodymium magnets. The liquid coolant used in the hot and coolant loops is generally a mixture of 70% glycol-30% water, which prevents the coolant from freezing or becoming too viscous at the low temperatures needed in the cold-side heat exchanger assembly 110.

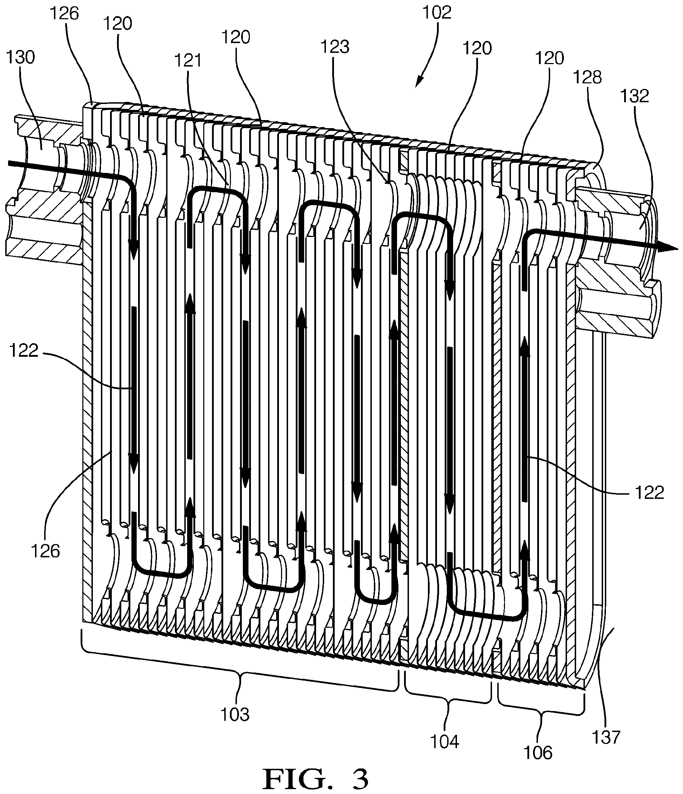

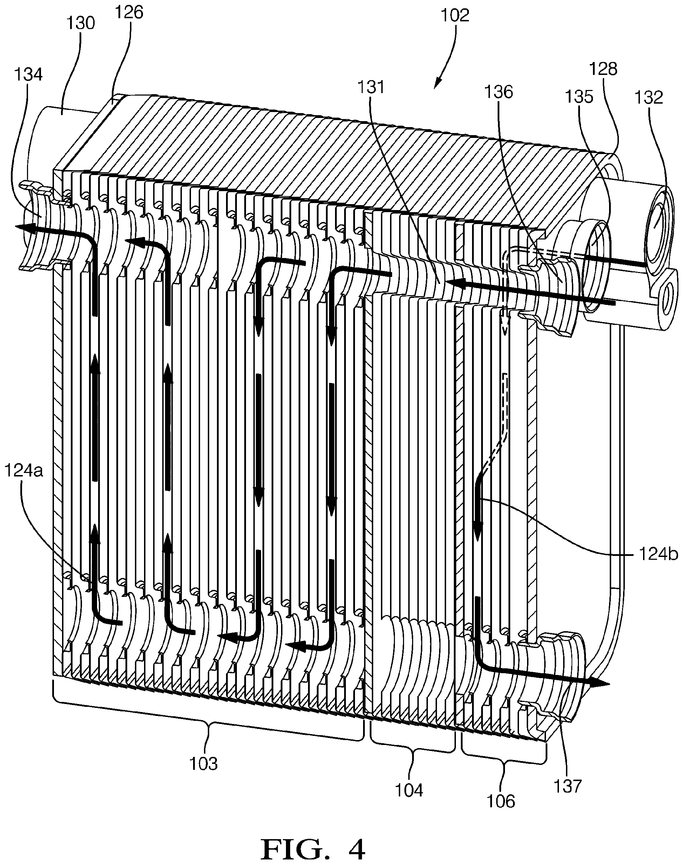

Shown in Figs. 3 and 4 are cross-sections of the hot-side heat exchanger assembly 102 of Fig. 2 taken along line 3-3 and line 4-4, respectively. The hot-side heat exchanger assembly 102 may be that of a plate-type heat exchanger assembly having a plurality of stamped metal plates 120 stacked and brazed between an upstream end plate 126 and a downstream end plate 128, with respect to the direction of refrigerant flow, to define a condenser/chiller portion 103, a receiver portion 104, and a sub-cooler portion 106. The upstream end plate 126 includes a refrigerant inlet 130 and a hot coolant outlet 134. The downstream end plate 128 includes a refrigerant outlet 132, a hot coolant inlet 136, a sub-cooler hot coolant inlet 135, and a sub-cooler hot coolant outlet 137. The stamped metal plates include features known to those of ordinary skill in the art, such as openings 121, bosses 123 about selected openings 121, and flanges 125, which when stacked, define a tortuous refrigerant passageway 122 for high pressure refrigerant flow from the refrigerant inlet 130 to the refrigerant outlet 132. The stacked plates also define a hot coolant header 131 that extends from the hot-coolant inlet 135 through both the sub-cooler portion 106 and receiver portion 104, a first hot coolant passageway 124a through the condenser/chiller portion 103 in fluid communication with the hot coolant header 131 and hot coolant outlet 134, and a second hot coolant passageway 124b through the sub-cooler portion 106 in fluid communication with the sub-cooler hot coolant inlet 135 and sub-cooler hot coolant outlet 137. The plates 120 may include numerous contact points established between adjacent plates to induce turbulence to the fluids flowing therethrough to provide a high heat transfer co-efficient.

The flows of the hot refrigerant and hot coolants through the hot-side heat exchanger assembly 102 are in non-contact thermal communication; in other words, the hot coolants 48a, 48b and refrigerant are not intermingled, but are in thermal communication with each other. Heat energy from the higher temperature refrigerant is transferred to the lower temperature hot coolants 48a,48b, thereby increasing the temperature of the hot coolant 48 as it leaves the hot-side heat exchanger assembly 102 returning to the hot coolant loop 16.

Shown in Fig. 3 is the flow path of the refrigerant passageway 122 through the hot-side heat exchanger assembly 102. The high pressure vapor refrigerant enters the refrigerant inlet 130, flows through the tortuous refrigerant passageways 122 within the condenser/chiller portion 103 and condenses into a liquid phase refrigerant as heat is transferred from the hotter refrigerant to the cooler hot-coolant flow. The substantially liquid phase refrigerant exits the condenser/chiller portion 103, enters the top of the receiver portion 104 and then exits the bottom of the receiver portion 104 in the sub-cooler portion 106, with respect to the direction of gravity. The vapor phase refrigerant remains within the top portion of the receiver portion 104, while the liquid phase refrigerant flows through the refrigerant passageway 122 within the sub-cooler portion 106 before exiting through the refrigerant outlet 132 to the TXV 108.

Shown in Fig. 4 is the flow path of the first and second hot coolant passageways 124a, 124b through the hot-side heat exchanger assembly 102. The hot side coolant pump 116 circulates a first portion hot side coolant 48a through the condenser/chiller portion 103 and a second portion side coolant 48b through the sub-cooler portion106. The first portion hot side coolant 48a enters the hot coolant inlet 136 and flows through the hot coolant header 131 directly into the condenser/ chiller portion 103. The heated first portion hot side coolant 48a exits the condenser/ chiller portion 103 into the heat sink 142. The second portion hot side coolant 48b flows through the second hot coolant passageway 124b within the sub-cooler portion 106 and joins the first portion hot side coolant 48a before flowing into the heat sink 142.

Similarly, the integral cold-side heat exchanger assembly 110 may also be plate-type heat exchangers. The integral cold-side heat exchanger assembly 110 includes a cold coolant inlet 138 and outlet 140, an evaporator refrigerant passageway for low pressure refrigerant flow, and a separate cold coolant passageway for cold coolant flow. The flows of the low pressure refrigerant and cold coolant through the integral cold-side heat exchanger assembly 110 are also in non-contact thermal communication with each other, and may be concurrent or countercurrent flow. Heat energy from the higher temperature cold coolant is transferred to the lower temperature evaporating refrigerant, thereby decreasing the temperature of the cold coolant as it leaves the integral cold-side heat exchanger assembly 110 and returning to the cold coolant loop 14.

Referring back to Fig. 2, unlike a traditional air conditioning system, where the refrigerant side components are remotely dispersed throughout the engine bay and within the HVAC module, the components of the Unitary HPAC 100 including the hot-side heat exchanger assembly 102, TXV 108, integral cold-side heat exchanger assembly 110, and electrically driven compressor 112 and coolant pumps 114, 116 may be all mounted onto a single platform 142 measuring approximately 420 mm by 290 mm. The components may be enclosed a housing, having a similar sized base and a height of about less than 190 mm, which is approximately the size of a typical bread box, for ease of handling and protection against the environment. The centralized location of the components that form the Unitary HPAC 100 allows the use of shorter length refrigerant tubes 113 which are manufactured from a refrigerant impermeable material, such as stainless steel, aluminum, and/or copper. The shorten length refrigerant impermeable tubes 113 minimizes refrigerant leaks and moisture infiltration; thereby allowing the use of a smaller volume receiver portion 104, since a large volume of reserve refrigerant is not required. The reduction of moisture infiltration reduces or eliminates the volume of desiccant needed, resulting in a more compact Unitary HPAC 100. Due to its compact size, the Unitary HPAC 100 may be installed in virtually any location within the body of a motor vehicle that can fit a bread box, such as within the trunk, under the hood, within the dashboard, or even under the seats.

While the invention has been described with reference to an exemplary embodiment, it will be understood by those skilled in the art that various changes may be made and equivalents may be substituted for elements thereof without departing from the scope of the invention as defined by the claims.

## Claims

1. A hot-side heat exchanger assembly (102) having a plurality of plates (120) stacked and hermetically sealed between an upstream end plate (126) and a downstream end plate (128), defining:
a condenser/chiller portion (103) adjacent said upstream end plate (126), wherein said upstream end plate (126) includes a refrigerant inlet (130) and a hot coolant outlet (134);
a sub-cooler portion (106) adjacent said downstream end plate (128),
wherein said downstream end plate (128) includes a refrigerant outlet (132), a hot coolant inlet (136), and a sub-cooler coolant inlet (135);
a refrigerant passageway (122) in hydraulic communication with said refrigerant inlet (130) and said refrigerant outlet (132), wherein said refrigerant passageway (122) extends through said condenser/chiller portion (103) and said sub-cooler portion (106);
a first coolant passageway (124a) in hydraulic communication with said hot coolant inlet (136) and said hot coolant outlet (134), wherein said first coolant passageway (124a) extends through said condenser/chiller portion (103); and
a second coolant passageway (124b) in hydraulic communication with said sub-cooler coolant inlet (135) and a sub-cooler coolant outlet (137),
wherein said wherein said second coolant passageway (124b) extends through said sub-cooler portion (106);
wherein said first coolant passageway (124a) and said second coolant passageway (124b) are in non-contact thermal communication with said refrigerant passageway (122), **characterized in that**
the downstream end plate (128) also includes the sub-cooler coolant outlet (137).

2. The hot-side heat exchanger assembly (102) of claim 1, further defining a refrigerant receiver portion (104) sandwiched between said condenser/chiller portion (103) and said sub-cooler portion (106), wherein said refrigerant passageway (122) extends through said refrigerant receiver portion (104).

3. The hot-side heat exchanger assembly (102) of claim 2, wherein said refrigerant passageway (122) meanders through at least one of said condenser/chiller portion (103), said receiver portion (104), and said sub-cooler portion (106).

4. The hot-side heat exchanger assembly (102) of claim 3, wherein said refrigerant passageway (122) enters top portion of said receiver portion (104) from said condenser/chiller portion (103) and exits bottom portion of said receiver portion (104) to said sub-cooler portion (106).

5. The hot-side heat exchanger assembly (102) of claim 2, wherein said plurality of stacked plates (120) of hot-side heat exchanger assembly (102) further defines a first coolant header (131) extending linearly through both said receiver portion (104) and sub-cooler portion (106), and in hydraulic communication with said first coolant passageway (124a) extending through said condenser/chiller portion (103) and said hot coolant inlet (136).

6. The hot-side heat exchanger assembly (102) of claim 5, wherein said first hot coolant passageway (124a) meanders through said condenser/chiller portion (103).

7. The hot-side heat exchanger assembly (102) of claim 5, wherein said second hot coolant passageway (124b) meanders through said sub-cooler portion (106).

8. The hot-side heat exchanger assembly (102) of claim 5, wherein said first hot coolant passageway (124a) is in non-contact counter-flow with said refrigerant passageway (122).

9. The hot-side heat exchanger assembly (102) of claim 3, further comprising:
a cold-side heat exchanger assembly (110) having a refrigerant inlet in hydraulic communication with said refrigerant outlet (132) of hot-side heat exchanger assembly (102) and a refrigerant outlet in hydraulic communication with said refrigerant inlet (130) of hot-side heat exchanger assembly (102); and
an electrically driven compressor (112) for circulating a refrigerant through said cold-side heat exchanger assembly (110) and said hot-side heat exchanger assembly (102) such that heat energy is transferred from said cold-side heat exchanger assembly (110) to said hot-side heat exchanger assembly (102).

10. The hot-side heat exchanger assembly (102) of claim 9, further comprising an electrically driven hot side coolant pump (116) in hydraulic communication with said coolant inlet of hot-side heat exchanger assembly (102) and an electrically driven cold side coolant pump (32) in hydraulic communication with a coolant inlet of said cold-side heat exchanger assembly (110).

11. A unitary heat pump air conditioner (100), comprising a hot-side heat exchanger assembly (102) as set in any of the preceding claim.

## Patentansprüche

1. Heißseitenwärmetauscheranordnung (102), die eine Vielzahl von Platten (120) aufweist, die zwischen einer stromaufwärtigen Endplatte (126) und einer stromabwärtigen Endplatte (128) gestapelt und hermetisch abgedichtet sind, definierend:
einen Kondensator-/Kühlerabschnitt (103) angrenzend an die stromaufwärtige Endplatte (126), wobei die stromaufwärtige Endplatte (126) einen Kältemitteleinlass (130) und einen Auslass für heißes Kühlmittel (134) einschließt;
einen Unterkühlerabschnitt (106) angrenzend an die stromabwärtige Endplatte (128), wobei die stromabwärtige Endplatte (128) einen Kältemittelauslass (132), einen Einlass für heißes Kühlmittel (136) und einen Unterkühler-Kühlmitteleinlass (135) aufweist;
einen Kältemitteldurchgang (122) in hydraulischer Verbindung mit dem Kältemitteleinlass (130) und dem Kältemittelauslass (132), wobei sich der Kältemitteldurchgang (122) durch den Kondensator-/Kühlerabschnitt (103) und den Unterkühlerabschnitt (106) erstreckt;
einen ersten Kühlmitteldurchgang (124a) in hydraulischer Verbindung mit dem Einlass für heißes Kühlmittel (136) und dem Auslass für heißes Kühlmittel (134), wobei sich der erste Kühlmitteldurchgang (124a) durch den Kondensator-/Kühlerabschnitt (103) erstreckt; und
einen zweiten Kühlmitteldurchgang (124b) in hydraulischer Verbindung mit dem Unterkühler-Kühlmitteleinlass (135) und einem Unterkühler-Kühlmittelauslass (137),
wobei sich der zweite Kühlmitteldurchgang (124b) durch den Unterkühlerabschnitt (106) erstreckt;
wobei der erste Kühlmitteldurchgang (124a) und der zweite Kühlmitteldurchgang (124b) in berührungsloser thermischer Verbindung mit dem Kältemitteldurchgang (122) stehen, **dadurch gekennzeichnet, dass**
die stromabwärtige Endplatte (128) auch den Unterkühler-Kühlmittelauslass (137) einschließt.

2. Heißseitenwärmetauscheranordnung (102) nach Anspruch 1, weiter definierend einen Kältemittelsammlerabschnitt (104), der sandwichartig zwischen dem Kondensator-/Kühlerabschnitt (103) und dem Unterkühlerabschnitt (106) eingeschoben ist, wobei sich der Kältemitteldurchgang (122) durch den Kältemittelsammlerabschnitt (104) hindurch erstreckt.

3. Heißseitenwärmetauscheranordnung (102) nach Anspruch 2, wobei sich der Kältemitteldurchgang (122) durch mindestens einen des Kondensator/Kühler-Abschnitts (103), des Sammlerabschnitts (104) und des Unterkühlerabschnitts (106) schlängelt.

4. Heißseitenwärmetauscheranordnung (102) nach Anspruch 3, wobei der Kältemitteldurchgang (122) vom Kondensator-/Kühlerabschnitt (103) in den oberen Teil des Sammlerabschnitts (104) eintritt und aus dem unteren Teil des Sammlerabschnitts (104) zum Unterkühlerabschnitt (106) austritt.

5. Heißseitenwärmetauscheranordnung (102) nach Anspruch 2, wobei die Mehrzahl von gestapelten Platten (120) der Heißseitenwärmetauscheranordnung (102) weiter einen ersten Kühlmittelsammler (131) definiert, der sich linear sowohl durch den Sammlerabschnitt (104) als auch durch den Unterkühlerabschnitt (106) erstreckt und in hydraulischer Verbindung mit dem ersten Kühlmitteldurchgang (124a) steht, der sich durch den Kondensator-/Kühlerabschnitt (103) und den Einlass (136) für heißes Kühlmittel erstreckt.

6. Heißseitenwärmetauscheranordnung (102) nach Anspruch 5, wobei sich der erste Durchgang für heißes Kühlmittel (124a) durch den Kondensator-/Kühlerabschnitt (103) schlängelt.

7. Heißseitenwärmetauscheranordnung (102) nach Anspruch 5, wobei sich der zweite Durchgang für heißes Kühlmittel (124b) durch den Unterkühlerabschnitt (106) schlängelt.

8. Heißseitenwärmetauscheranordnung (102) nach Anspruch 5, wobei der erste Durchgang für heißes Kühlmittel (124a) im berührungslosen Gegenstrom mit dem Kältemitteldurchgang (122) ist.

9. Heißseitenwärmetauscheranordnung (102) nach Anspruch 3, weiter umfassend:
eine Kaltseitenwärmetauscheranordnung (110), die einen Kältemitteleinlass in hydraulischer Verbindung mit dem Kältemittelauslass (132) der Heißseitenwärmetauscheranordnung (102) und einem Kältemittelauslass in hydraulischer Verbindung mit dem Kältemitteleinlass (130) der Heißseitenwärmetauscheranordnung (102) aufweist; und
einen elektrisch angetriebenen Kompressor (112) zum Zirkulieren eines Kältemittels durch die Kaltseitenwärmetauscheranordnung (110) und die Heißseitenwärmetauscheranordnung (102), so dass Wärmeenergie von der Kaltseitenwärmetauscheranordnung (110) auf die Heißseitenwärmetauscheranordnung (102) übertragen wird.

10. Heißseitenwärmetauscheranordnung (102) nach Anspruch 9, weiter umfassend eine elektrisch angetriebene Heißseitenkühlmittelpumpe (116) in hydraulischer Verbindung mit dem Kühlmitteleinlass der Heißseitenwärmetauscheranordnung (102) und eine elektrisch angetriebene Kaltseitenkühlmittelpumpe (32) in hydraulischer Verbindung mit einem Kühlmitteleinlass der Kaltseitenwärmetauscheranordnung (110).

11. Einteiliges Wärmepumpen-Klimaanlage (100), die eine Heißseitenwärmetauscheranordnung (102) gemäß einem der vorstehenden Ansprüche umfasst.

## Revendications

1. Ensemble échangeur de chaleur côté chaud (102) ayant une pluralité de plaques (120) empilées et hermétiquement scellées entre une plaque d'extrémité amont (126) et une plaque d'extrémité aval (128), définissant :
une portion condenseur/dispositif de réfrigération (103) adjacente à ladite plaque d'extrémité amont (126), dans laquelle ladite plaque d'extrémité amont (126) inclut une entrée de réfrigérant (130) et une sortie de liquide de refroidissement chaud (134) ;
une portion sous-refroidisseur (106) adjacente à ladite plaque d'extrémité aval (128), dans laquelle ladite plaque d'extrémité aval (128) inclut une sortie de réfrigérant (132), une entrée de liquide de refroidissement chaud (136) et une entrée de liquide de refroidissement de sous-refroidisseur (135) ;
un passage de réfrigérant (122) en communication hydraulique avec ladite entrée de réfrigérant (130) et ladite sortie de réfrigérant (132), dans lequel ledit passage de réfrigérant (122) s'étend à travers ladite portion condenseur/dispositif de réfrigération (103) et ladite portion sous-refroidisseur (106) ;
un premier passage de liquide de refroidissement (124a) en communication hydraulique avec ladite entrée de liquide de refroidissement chaud (136) et ladite sortie de liquide de refroidissement chaud (134), dans lequel ledit premier passage de liquide de refroidissement (124a) s'étend à travers ladite portion condenseur/dispositif de réfrigération (103) ; et
un second passage de liquide de refroidissement (124b) en communication hydraulique avec ladite entrée de liquide de refroidissement de sous-refroidisseur (135) et une sortie de liquide de refroidissement de sous-refroidisseur (137), dans lequel ledit dans lequel ledit second passage de liquide de refroidissement (124b) s'étend à travers ladite portion sous-refroidisseur (106) ;
dans lequel ledit premier passage de liquide de refroidissement (124a) et ledit second passage de liquide de refroidissement (124b) sont en communication thermique sans contact avec ledit passage de réfrigérant (122), **caractérisé en ce que**
la plaque d'extrémité aval (128) inclut également la sortie de liquide de refroidissement de sous-refroidisseur (137).

2. Ensemble échangeur de chaleur côté chaud (102) selon la revendication 1, définissant en outre une portion récepteur de réfrigérant (104) prise en sandwich entre ladite portion condenseur/dispositif de réfrigération (103) et ladite portion sous-refroidisseur (106), dans lequel ledit passage de réfrigérant (122) s'étend à travers ladite portion récepteur de réfrigérant (104).

3. Ensemble échangeur de chaleur côté chaud (102) selon la revendication 2, dans lequel ledit passage de réfrigérant (122) fait des méandres à travers au moins une de ladite portion condenseur/dispositif de réfrigération (103), ladite portion récepteur (104) et ladite portion sous-refroidisseur (106).

4. Ensemble échangeur de chaleur côté chaud (102) selon la revendication 3, dans lequel ledit passage de réfrigérant (122) entre dans une portion supérieure de ladite portion récepteur (104) depuis ladite portion condenseur/dispositif de réfrigération (103) et sort de la portion inférieure de ladite portion récepteur (104) jusqu'à ladite portion sous-refroidisseur (106).

5. Ensemble échangeur de chaleur côté chaud (102) selon la revendication 2, dans lequel ladite pluralité de plaques empilées (120) d'ensemble échangeur de chaleur côté chaud (102) définit en outre un premier collecteur de liquide de refroidissement (131) s'étendant linéairement tant à travers ladite portion récepteur (104) qu'à travers la portion sous-refroidisseur (106), et en communication hydraulique avec ledit premier passage de liquide de refroidissement (124a) s'étendant à travers ladite portion condenseur/dispositif de réfrigération (103) et ladite entrée de liquide de refroidissement chaud (136).

6. Ensemble échangeur de chaleur côté chaud (102) selon la revendication 5, dans lequel ledit premier passage de liquide de refroidissement chaud (124a) fait des méandres à travers ladite portion condenseur/dispositif de réfrigération (103).

7. Ensemble échangeur de chaleur côté chaud (102) selon la revendication 5, dans lequel ledit second passage de liquide de refroidissement chaud (124b) fait des méandres à travers ladite portion sous-refroidisseur (106).

8. Ensemble échangeur de chaleur côté chaud (102) selon la revendication 5, dans lequel ledit premier passage de liquide de refroidissement chaud (124a) est à contre-courant sans contact avec ledit passage de réfrigérant (122).

9. Ensemble échangeur de chaleur côté chaud (102) selon la revendication 3, comprenant en outre :
un ensemble échangeur de chaleur côté froid (110) ayant une entrée de réfrigérant en communication hydraulique avec ladite sortie de réfrigérant (132) d'ensemble échangeur de chaleur côté chaud (102) et une sortie de réfrigérant en communication hydraulique avec ladite entrée de réfrigérant (130) d'ensemble échangeur de chaleur côté chaud (102) ; et
un compresseur électriquement entraîné (112) pour faire circuler un réfrigérant à travers ledit ensemble échangeur de chaleur côté froid (110) et ledit ensemble échangeur de chaleur côté chaud (102) de sorte que de l'énergie calorifique est transférée depuis ledit ensemble échangeur de chaleur côté froid (110) jusqu'audit ensemble échangeur de chaleur côté chaud (102).

10. Ensemble échangeur de chaleur côté chaud (102) selon la revendication 9, comprenant en outre une pompe de liquide de refroidissement côté chaud électriquement entraînée (116) en communication hydraulique avec ladite entrée de liquide de refroidissement d'ensemble échangeur de chaleur côté chaud (102) et une pompe de liquide de refroidissement côté froid électriquement entraînée (32) en communication hydraulique avec une entrée de liquide de refroidissement dudit ensemble échangeur de chaleur côté froid (110).

11. Climatiseur à pompe à chaleur unitaire (100), comprenant un ensemble échangeur de chaleur côté chaud (102) tel que décrit dans n'importe quelle revendication précédente.
